# EUROPEAN PATENT SPECIFICATION

(11) **EP 2 296 316 B1**
(45) Date of publication and mention of the grant of the patent: **26.12.2012**
(21) Application number: 10175138.6
(22) Date of filing: 02.09.2010
(51) Int. Cl.: H04L 12/24, H04L 12/26

(54) **Device management apparatus, device management system, device management program, and storage medium**
Bildverwaltungsvorrichtung, Vorrichtungsverwaltungssystem, Vorrichtungsverwaltungsprogramm und Speichermedium
Appareil de gestion de dispositif, système de gestion de dispositif, programme de gestion de dispositif et support de stockage

(30) Priority: 15.09.2009 JP 2009213577
(43) Date of publication of application: 16.03.2011
(73) Proprietor: Ricoh Company Ltd., Tokyo 143-8555 (JP)
(72) Inventor: Yamashita, Akihiro, Tokyo 143-8555 (JP)
(74) Representative: Schwabe - Sandmair - Marx

(56) References cited:
- EP-A1- 0 602 777
- WO-A1-01/47190
- US-A1- 2004 228 284
- US-A1- 2008 089 225

## Description

### CROSS-REFERENCE TO RELATED APPLICATIONS

The present application claims priority to Japanese Patent Application No. 2009-213577 filed in Japan on September 15, 2009.

### BACKGROUND OF THE INVENTION

### 1. Field of the Invention

The present invention relates to a device management apparatus, a device management system, and a device management program for managing devices connected to a network, and to a storage medium.

### 2. Description of the Related Art

Device management systems have been increasingly used to manage devices connected to networks, as devices connected to the same network increases in number. A large number of devices connected to a network may be replaced or otherwise changed so that older devices will no longer exist on the network for a certain period of time. However, this situation cannot be automatically detected with ease by the device management system. This is due to the fact that the device management system is capable of determining whether it can communicate with the device, but remotely knows with difficulty whether the system cannot communicate with the device because the device has been turned off or already disconnected from the network.

In this context, there has been provided a method for checking the operation of a device while being powered to know the connection status thereof based on the presence or absence of a response (for example, Japanese Patent Application Laid-open No. H8-307431). According to the method disclosed in this patent document, the period of time during which the device is powered is pre-stored as schedule information in a storage unit. Based on this schedule information, the device to be monitored is determined whether it is in a mode of operation, so that if not, an error is issued.

However, the method of the above patent document displays all the monitored devices, including both one that sends a response and one that does not send a response, thereby disabling the administrator to know no-response devices with ease. Accordingly, the no-response devices need to be individually filtered from the list of managed devices by the administrator, thus leading to inefficient and complicated management of devices.

EP 0 602 777 A1 is directed to a terminal device management system including a plurality of terminal devices and a remote management apparatus connected to the plurality of terminal devices wire lines. Furthermore, it is mentioned as a problem to be solved that the individual terminal devices send calls to the remote management apparatus for a line connection at random which may block the line connection due to overload.

### SUMMARY OF THE INVENTION

It is an object of the present invention to at least partially solve the problems in the conventional technology.

According to an aspect of the present invention there is provided a device management apparatus connected to one or more devices via a network, including: a response request unit that requests a response from the devices via the network; a reception unit that receives the response from the respective devices, a storage unit that stores a record, the record being arranged such that device identification information for identifying the devices is associated with response information indicative of whether the response was received and a date and time at which the response was received (the "date and time" is also referred to as metadata); a recording unit that records, if the response was received, the response information indicative of a presence of the response and the date and time on the record associated with the device identification information of corresponding one of the devices from which the response was received, or records, if the response was not received, the response information indicative of an absence of the response on the record associated with the device identification information of corresponding one of the devices from which the response was not received; and an output control unit that reads on the storage unit and delivers the device identification information indicating that the corresponding response information is indicative of an absence of the response and an elapsed time from the corresponding date and time has exceeded a predetermined period.

According to another aspect of the present invention there is provided a device management system including one or more devices and a device management apparatus connected thereto via a network. The device management apparatus includes: a response request unit that requests a response from the devices via the network; a reception unit that receives the response from the respective devices; a storage unit that stores a record, the record being arranged such that device identification information for identifying the devices is associated with response information indicative of whether the response was received and a date and time at which the response was received; a recording unit that records, if the response was received, the response information indicative of a presence of the response and the date and time on the record associated with the device identification information of corresponding one of the devices from which the response was received, or records, if the response was not received, the response information indicative of an absence of the response on the record associated with the device identification information of corresponding one of the devices from which the response was not received; and an output control unit that reads on the storage unit and delivers the device identification information for which the corresponding response information is indicative of an absence of the response and an elapsed time from the corresponding date and time has exceeded a predetermined period. The devices includes: a transmission unit that sends the response to the device management apparatus via the network when having received the response request from the device management apparatus.

According to still another aspect of the present invention there is provided a computer program product comprising a computer-usable medium having computer-readable program codes. The program codes when executed causing a computer to execute: a response request step of requesting a response from one or more devices via a network; a reception step of receiving the response from the respective devices, a recording step of recording a record on a storage unit, if the response was received, the record being arranged such that the response information indicative of a presence of the response, the date and time, and the device identification information of corresponding on of the devices from which the response was received are associated with each other, or for recording a record on the storage unit, if the response was not received, the record being arranged such that the response information indicative of an absence of the response is associated with the device identification information of corresponding one of the devices from which the response was not received; and an output step of reading on the storage unit and delivering the device identification information for which the corresponding response information is indicative of an absence of the response and an elapsed time from the corresponding date and time has exceeded a predetermined period.

Advantageously, the response request unit is configured to request a response from the devices a plural number of times, in particular at least twice. Advantageously, at least one response is received by the reception unit. According to a preferred embodiment of the invention, the response information indicates a date and time at which the response was received if the response was received, in particular only if the response was received.

The device identification information indicates the elapsed time advantageously if a response had been previously received, in particular only if a response had been previously received. The elapsed time then is the time elapsed from the corresponding date and time of the previously received response. In particular, the previously received response is received in reaction to a request sent by the response request unit earlier in time than the request in response to which the absence of a response has been determined. The corresponding date and time of the previously received response preferably is the date and time of the corresponding one of the devices from which the response was received. In particular, the corresponding device is the device with the same device identification information, in particular network address (IP address) as the device from which the previous response was received. Advantageously, the previously received response is the latest response received from the corresponding device.

The response in particular is used for an update of the device identification information in particular in case of the metadata of an update of the status of the device in the record (in particular, in a device information table). Additionally or alternatively, the response is used for an update of the status of the device. Preferably, the date and time at which the response is received is used as a date and time of the (latest) update of the device identification information. In particular, the response is used for updating metadata of the device identification information.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a schematic diagram illustrating a device management system 1 according to first and second embodiments of the present invention;
Fig. 2 is a hardware block diagram of a device management apparatus 100 according to the embodiments;
Fig. 3 is a diagram illustrating an example of the software configuration of the device management apparatus 100;
Fig. 4 is a functional block diagram of the device management apparatus 100 and a managed device 200 according to the first embodiment of the present invention;
Fig. 5 is a diagram illustrating an example of a device information table stored in an HDD 108;
Fig. 6 is a sequence diagram illustrating the steps of displaying a device list;
Fig. 7 is a diagram illustrating an example of a normal display window without a no-response filter applied;
Fig. 8 is a diagram illustrating an example of a display window with the no-response filter applied;
Fig. 9 is a functional block diagram illustrating a device management apparatus 400 and a managed device 200 according to the second embodiment of the present invention;
Fig. 10 is a sequence diagram illustrating the steps of deleting device information;
Fig. 11 is a schematic diagram illustrating a device management system 2 according to a third embodiment of the present invention;
Fig. 12 is a functional block diagram illustrating a device management apparatus 500 and a managed device 200 according to the third embodiment of the present invention;
Fig. 13 is a sequence diagram illustrating the steps of transmitting an email according to the third embodiment;
Fig. 14 is a functional block diagram illustrating a device management apparatus 600 and a managed device 200 according to a fourth embodiment of the present invention;
Fig. 15 is a sequence diagram illustrating the steps of transmitting an email according to the fourth embodiment; and
Fig. 16 is a block diagram illustrating the hardware configuration of a multifunction peripheral as a managed device 200 in the first to fourth embodiments.

### DETAILED DESCRIPTION OF THE PREFERRED EMBODIMENTS

Now, referring to the accompanying drawings, a detailed description will be made to the preferred embodiments of a device management apparatus, a device management system, a device management program, and a storage medium, according to the invention.

### (First embodiment)

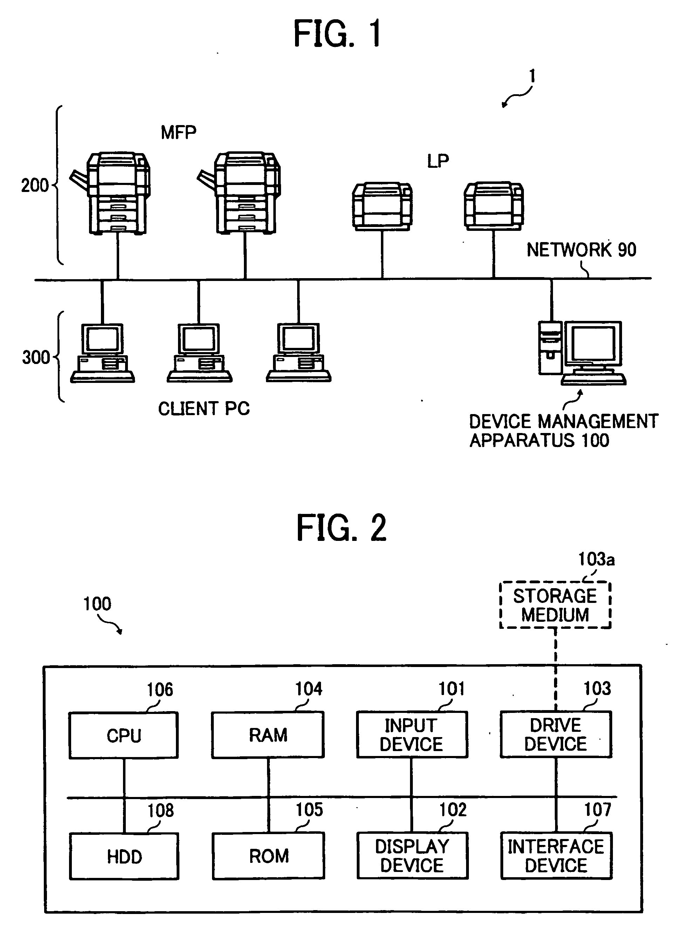

Fig. 1 is a schematic diagram illustrating a device management system 1 according to the first embodiment of the present invention. As shown in Fig. 1, the device management system 1 is configured such that one or more managed devices 200 such as an MFP (Multifunction Peripheral) and an LP (Laser Printer), one or more client PCs (Personal Computers) 300, and a device management apparatus 100 are connected to a network 90.

In such a system structure, the device management apparatus 100 monitors and manages the status conditions of the managed devices 200 through a device management function operated in the device management apparatus 100. Furthermore, the device management apparatus 100 provides the PC 300 with various types of information on the status of the managed devices 200.

Now, a description will be made to the hardware configuration of the device management apparatus 100. Fig. 2 shows a hardware block diagram of the device management apparatus 100 according to the present embodiment. As shown in Fig. 2, the device management apparatus 100 mainly includes an input device 101, a display device 102, a drive device 103, a RAM (Random Access Memory) 104, a ROM (Read Only Memory) 105, a CPU 106, an interface device 107, and an HDD (Hard Disk Drive) 108, which are interconnected to one another via a bus.

The input device 101 may be a keyboard or a mouse for receiving operation signals that the user enters into the device management apparatus 100. The display device 102 may be a display which displays the results of processing performed by the device management apparatus 100, etc.

The interface device 107 serves to connect the device management apparatus 100 and the managed devices 200 to the network 90. The connection allows the device management apparatus 100 to communicate data via the interface device 107 to the managed devices 200.

The HDD 108 stores various types of programs and pieces of data. The stored programs and pieces of data include, for example, information processing programs to control the entire device management apparatus 100 and applications to provide various functions on the information processing system. The HDD 108 also manages the stored programs and data using a given file system and/or DB (Database).

The drive device 103 is an interface with a removable storage medium 103a. The device management apparatus 100 can read and write on the storage medium 103a via the drive device 103.

The ROM 105 is a non-volatile semiconductor memory device (storage device) which can sustain internal data even when its power has been turned off. The ROM 105 stores data such as the BIOS (Basic Input/Output System) to run when the device management apparatus 100 is initiated, the system configuration of the device management apparatus 100, and network-related settings.

The RAM 104 is a volatile semiconductor memory device (storage device) which can temporarily hold programs and data read from various types of storage devices. The CPU 106 runs programs read onto the RAM 104, thereby providing control to the entire device management apparatus 100 and realizing the operation of the various functions incorporated therein.

With such a hardware configuration, the device management apparatus 100 allows the CPU 106 to execute, for example, a program (device management program) read from the HDD 108 onto the RAM 104, thereby implementing the device management function.

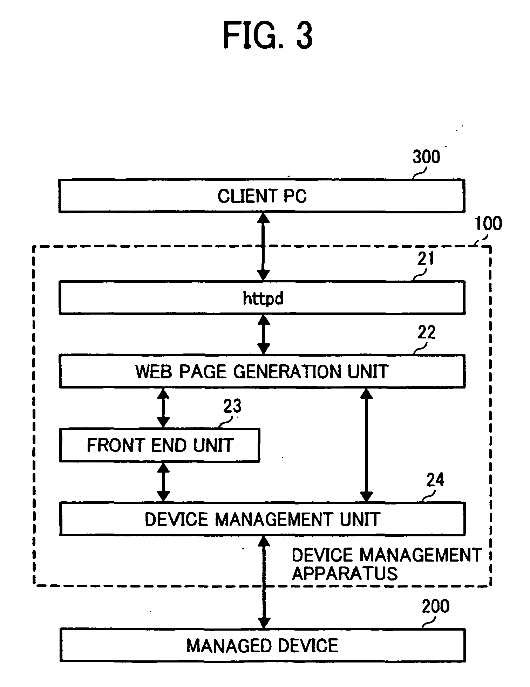

Now, the software structure in the device management apparatus 100 will be described. Fig. 3 is a view illustrating an example of the software configuration in the device management apparatus 100. As shown in Fig. 3, the device management apparatus 100 has a group of software components installed therein which mainly include an httpd (Hyper Text Transfer Protocol Daemon) 21, a web page generation unit 22, a front end unit 23, and a device management unit 24.

The httpd 21, or a program on a web server resident in the information processing system, is configured to receive an operation request from a browser and send contents accumulated in the server in response to the request.

The web page generation unit 22 generates a web page to be displayed on the browser based on the request received at the httpd 21.

The front end unit 23 acquires data, which is necessary to generate a web page at the web page generation unit 22, from the device management unit 24, to be described later, and then processes the acquired data so as to generate the web page.

To realize the device management functions, the device management unit 24 monitors the managed devices 200, acquires device information, manages various types of data such as acquired information, and performs various types of data manipulations, for example, when requested to search or update data.

This means that the device management unit 24 is equivalent to software components which implement the device management functions operated on the device management apparatus 100. The httpd 21, the web page generation unit 22, the front end unit 23, etc. are equivalent to the software components which implement a function for providing information to the PC 300.

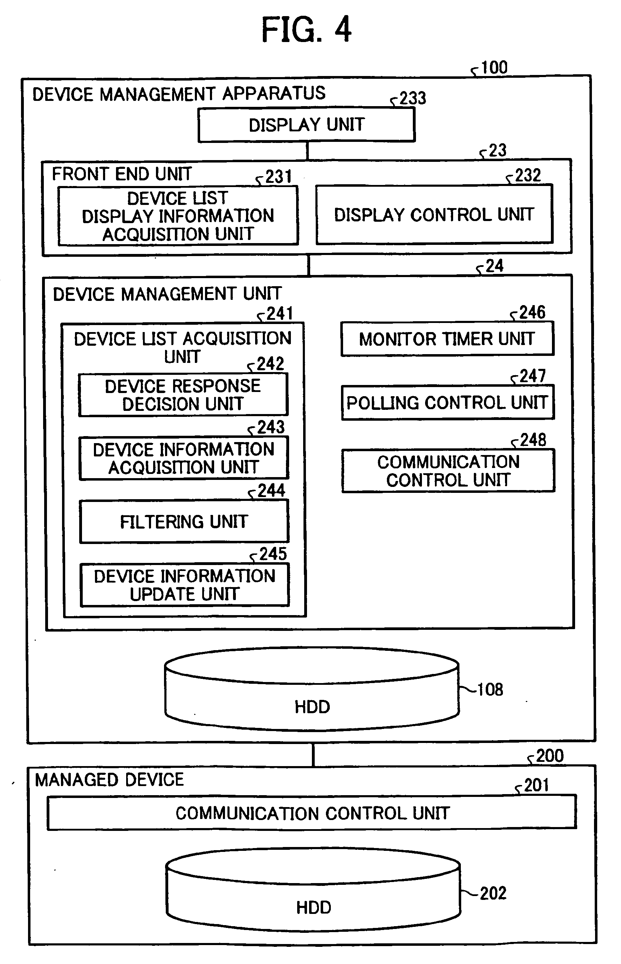

Now, the functional structures of the device management apparatus 100 and the managed devices 200 will be described. Fig. 4 is a functional block diagram illustrating the device management apparatus 100 and the managed devices 200 according to the first embodiment of the present invention. Fig. 4 shows the functional structures of the front end unit 23 and the device management unit 24 for the device management apparatus 100, and the functional structure of the managed devices 200.

As shown in Fig. 4, the device management unit 24 of the device management apparatus 100 mainly includes a device list acquisition unit 241, a monitor timer unit 246, a polling control unit 247, a communication control unit 248, and the HDD 108. The front end unit 23 mainly includes a device list display information acquisition unit 231, a display control unit 232, and a display unit 233.

The HDD 108 stores system information and device information tables. Here, the system information contains values to be used in the entire system, where the values may include, for example, a given period that defines the interval at which polling is performed. The given period can be a predetermined number of days. The device information table is organized such that the IP address of a device is associated with the model name, the status, and the latest update date and time of the device. Note that among those pieces of information, the device information corresponds to the IP address, the model name, and the status of a device.

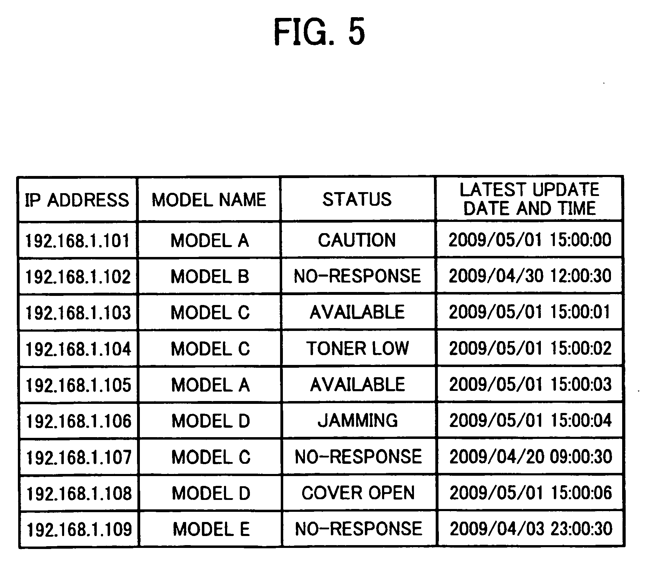

Fig. 5 is a view illustrating an example of a device information table stored in the HDD 108. As shown in Fig. 5, for example, the first record in the device information table associates the IP address "192.168.1.101" with the model name "Model A," the status "caution," and the latest update date and time "2009/05/01 15:0000:00." Here, as the status, the conditions of the device is indicated by category, such as "no-response," "available," "toner low," "jamming," and "cover open" in addition to "caution" that indicates that a failure is likely to occur.

The device list acquisition unit 241 includes a device response decision unit 242, a device information acquisition unit 243, a filtering unit 244, and a device information update unit 245. The device list acquisition unit 241 acquires a device list through these units upon reception of a device list acquisition request from the device list display information acquisition unit 231. Here, the device list is a list of device information to be displayed on the display unit 233 or the display device of the client PC 300. On the other hand, the device list acquisition request means a request to acquire a device list.

The device information acquisition unit 243 acquires MIB (Management Information Base) information from a device through the communication control unit 248 according to an acquisition request from the device list acquisition unit 241. Then, the device information acquisition unit 243 acquires device information from the MIB information acquired. Here, the MIB information is the information which a network device managed by SNMP (Simple Network Management Protocol) makes public in order to allow the status to be known to the outside. The MIB information includes the device information. The device information acquisition unit 243 saves the acquired MIB information on the HDD 108.

The device response decision unit 242 determines whether there is a response from a device based on polling by the polling control unit 247.

The device information update unit 245 updates the device information table stored in the HDD 108, based on the response result determined by the device response decision unit 242 and the device information acquired by the device information acquisition unit 243. Note that the device response decision unit 242 and the device information update unit 245 are equivalent to a recording unit of the present invention.

More specifically, for a device determined by the device response decision unit 242 to have returned a response, the status associated with the IP address of the device in the device information table is rewritten to the status that is contained in the device information acquired by the device information acquisition unit 243. Furthermore, the latest update date and time associated with the IP address of the device in the device information table is changed to the date and time at which the device information acquisition unit 243 has acquired the device information from the device.

On the other hand, for a device determined by the device response decision unit 242 to have returned no response, the status associated with the IP address of the device in the device information table is changed to "no response." Here, for the device determined to have returned no response, the corresponding latest update date and time will not be changed, so that the latest update date and time at which a response was returned is saved.

The filtering unit 244 refers to the device information table and selects a device which is registered with the device information table and which has a device ID with the status "no response" and the elapsed time from the latest update date and time exceeding a predetermined period. The filtering unit 244 then saves the device information and the latest update date and time of the selected device as a device list in the HDD 108.

Note here that the predetermined period can be set for each device or for each group. For example, the predetermined period can be changed for each group, where devices are used with different frequencies for the each group, for example, for each business location or each department.

The predetermined period can also be set according to the actual operation period of each device in the past. For example, this can be done by holding the history of no response to polls in the past one week. In this case, when polling is performed once in an hour, the history is kept regarding how many times no response was received to the total number of polls, i.e., 24 (hours) × 7 (days) = 168 polls. Thus, the predetermined period can be changed depending on that value. That is, devices with a less number of no-responses are to be provided with a shorter period, whereas those with a greater number of no-responses are to be provided with a longer period.

In this manner, dynamically changing the predetermined period from the latest update date and time makes it possible to manage devices more accurately and efficiently.

The polling control unit 247 controls threading of polls. The polling control unit 247 initiates a processing thread to call up the device information acquisition unit 243 and the device information update unit 245.

Now, the thread will be briefly described below. The thread is an execution unit of software on an OS (Operating System) which supports multithreading. One program has at least one thread. Those threads that belong to the same program share resources such as work areas on the RAM 104. Furthermore, a plurality of initiated threads can be processed apparently in parallel, i.e., executed simultaneously by occupying the CPU 106 alternately.

The polling control unit 247 manages the number of currently active threads (hereinafter referred to as the initiated thread number), to initiate a new thread depending on the maximum number of threads. In this manner, the device information acquisition unit 243 and the device information update unit 245 are executed in parallel by a plurality of threads. The thread initiated by the polling control unit 247 sends to the device response decision unit 242 a request to acknowledge the device response, before issuing an information acquisition request to the managed devices 200.

The device response decision unit 242 determines whether there is a response from the managed devices 200 to the request for acknowledgement from the polling control unit 247. For example, the device response decision unit 242 issues a response confirmation request (dummy request) before issuing the information acquisition request. The device response decision unit 242 determines whether there is a response from the managed devices 200, and then returns to the thread the result of determination of whether there is a response.

The monitor timer unit 246 directs the polling control unit 247 to start polling at certain time intervals, thereby controlling the timing at which device information is acquired.

The communication control unit 248 controls communications with the managed devices 200 via the network 90. Note that the communications are carried out based on the IP address of the devices.

Suppose that the device list display information acquisition unit 231 receives an acquisition request (hereinafter referred to as the device list information acquisition request) to acquire the information on a device list (hereinafter referred to as the device list information) from the web page generation unit 22. In this case, the device list display information acquisition unit 231 acquires the device list display information from the device list acquisition unit 241 and then converts the acquired device list information into such information that can be used to be displayed, depending on whether the information is to be displayed on the display unit 233 or the display device of the client PC 300. The device list information acquisition unit 231 sends the converted device list information to the display control unit 232 or the client PC 300.

The display control unit 232 displays on the display unit 233 the display window of the device list information converted by the device list display information acquisition unit 231.

Now, as shown in Fig. 4, the managed devices 200 each mainly include a communication control unit 201 and an HDD 202.

The HDD 202 stores the MIB information. The communication control unit 201 controls communications with the device management apparatus 100 via the network 90. Note that the communications are carried out based on the IP address of the devices.

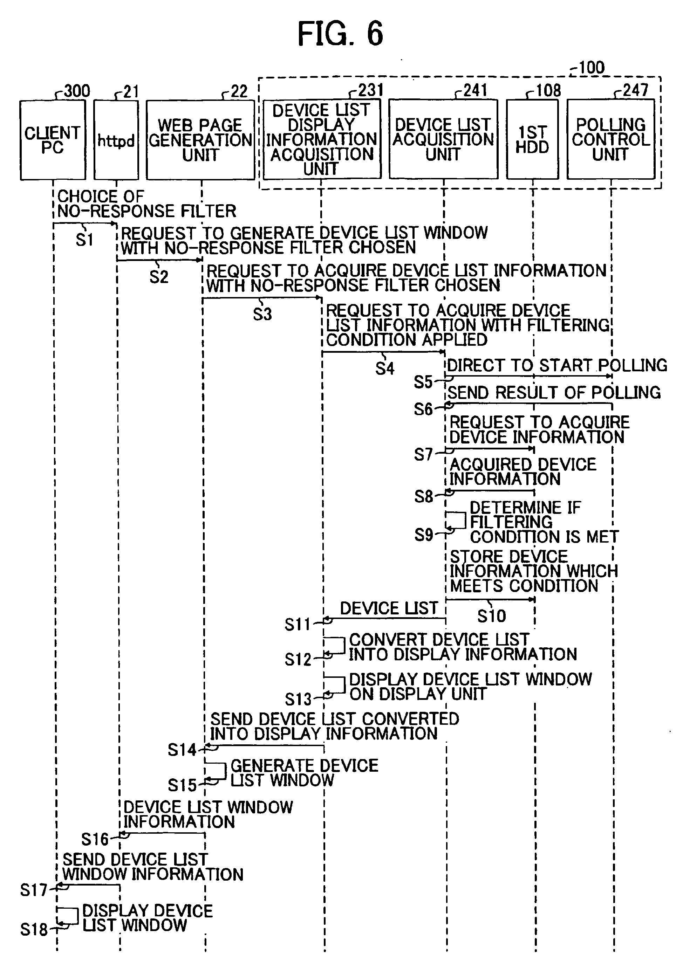

Now, a description will be made to the steps for displaying a device list. Fig. 6 is a sequence diagram illustrating the steps for displaying a device list.

The client PC 300 sends a no-response filter choice as a choice of a device list display window to the httpd 21 (step S1). Here, what is meant by the no-response filter is that the conditions for filtering by the device list acquisition unit 241 are set as follows; the result of response to polling indicates that there is no-response and a certain period have passed from the latest update date and time.

The httpd 21 sends a request to the web page generation unit 22 to generate a device list window with the no-response filter selected (step S2). The web page generation unit 22 sends a request to the device list display information acquisition unit 231 to acquire the device list information with the no-response filter selected (step S3).

Upon reception of the request from the web page generation unit 22 to generate a device list window with the no-response filter selected, the device list display information acquisition unit 231 requests the device list acquisition unit 241 to acquire the device list information with a filtering condition applied (step S4).

The device list acquisition unit 241 directs the polling control unit 247 to start polling for a given period (step S5). The polling control unit 247 polls the managed devices 200 registered with the device information table for the given period, and then sends the result of polling to the device list acquisition unit 241 (step S6).

Upon reception of the result of polling from the polling control unit 247, the device list acquisition unit 241 sends a request for device information to the managed devices 200 (step S7). When having received the request for device information, the managed devices 200 acquire their own device information from the HDD 202 and send it to the device list acquisition unit 241 (step S8). Note that steps S7 and S8 are repeated as many times as the number of the devices registered with the device information table of the HDD 108.

The device list acquisition unit 241 checks to see if the filtering condition is met based on whether there is a response from the managed devices 200 and based on the latest update date and time (step S9). The device list acquisition unit 241 stores, as the device list, a record of a device information table indicating the managed devices 200 which meet the filtering condition, into the HDD 108 (step S10). More specifically, the device list acquisition unit 241 employs such a filtering condition that the response result is no response and a certain number of days have passed from the latest update date and time. Note that since the device information update unit 245 will not rewrite the latest update date and time of the record associated with a no-response device, that latest update date and time of the record associated with the no-response device substantially indicates the last communication date and time.

The device list acquisition unit 241 sends the device list to the device list display information acquisition unit 231 (step S11). The device list display information acquisition unit 231 converts the received device list into display information (step S12). The device list display information acquisition unit 231 displays the display information as a display window on the display unit 233 (step S13).

The device list display information acquisition unit 231 also sends the device list converted into the display information to the web page generation unit 22 (step S14). The web page generation unit 22 generates the display window of the received device list (hereinafter referred to as the device list window) (step S15).

The web page generation unit 22 sends the information of the generated device list window (hereinafter referred to as the device list window information) to the httpd 21 (step S16). The httpd 21 sends the received device list window information to the client PC 300 (step S17). Based on the received device list window information, the client PC 300 then displays on the display device the device list window with the no-response filter applied (step S18).

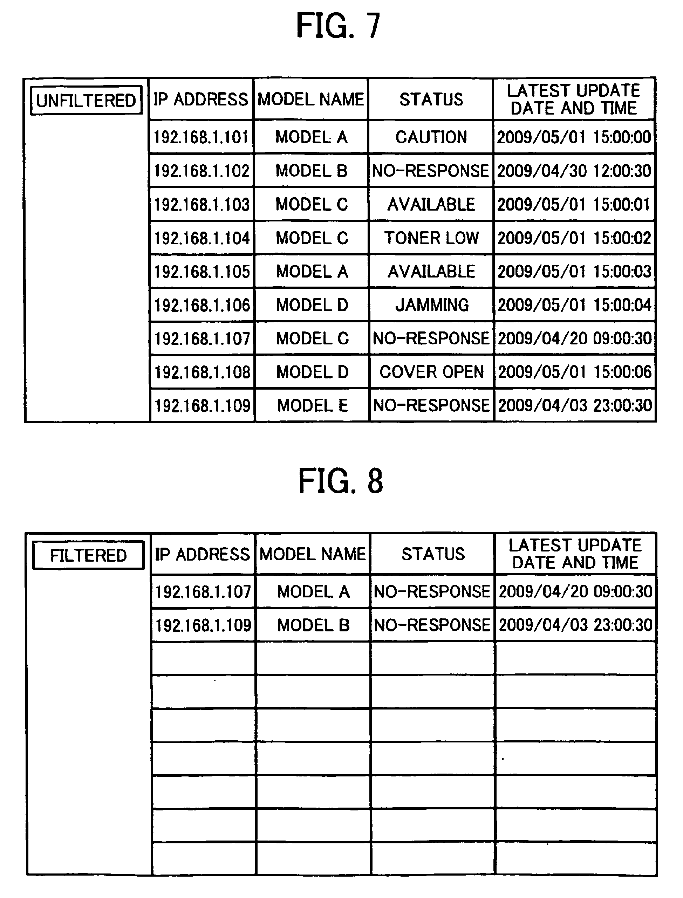

Now, a description will be made to a normal device list window without a no-response filter applied and a device list window with a no-response filter applied. Fig. 7 shows an example of the normal device list window without the no-response filter applied. As shown in Fig. 7, the display control unit 232 or the client PC 300 displays the device information of all the devices registered with the device information table in the HDD 108 regardless of whether a response was returned from the devices. On the other hand, Fig. 8 shows an example of the device list window with the no-response filter applied. As shown in Fig. 8, the display control unit 232 or the client PC 300 displays a list that include only the device for which the device list acquisition unit 241 has acquired the records whose status indicates "no-response" and which indicate that a certain number of days have passed from the latest update date and time.

In this manner, it is possible to extract the device information of a device which returned no response, and for which a certain period has elapsed from the last communication date and time, thereby efficiently managing devices connected to a network.

### (Second embodiment)

The first embodiment is configured to detect a device that has been already disconnected from a network and display the identification information of the detected device. In contrast to this, the present embodiment is configured such that the device management apparatus detects a device having been already disconnected from a network and deletes the identification information of the detected device from the device information table, thereby managing the devices.

Now, a description will be made to the functional structure of the device management apparatus 400 and the managed devices 200. Note that the hardware configurations of the device management system and the device management apparatus 400 are the same as those of the first embodiment, and thus will not be described again.

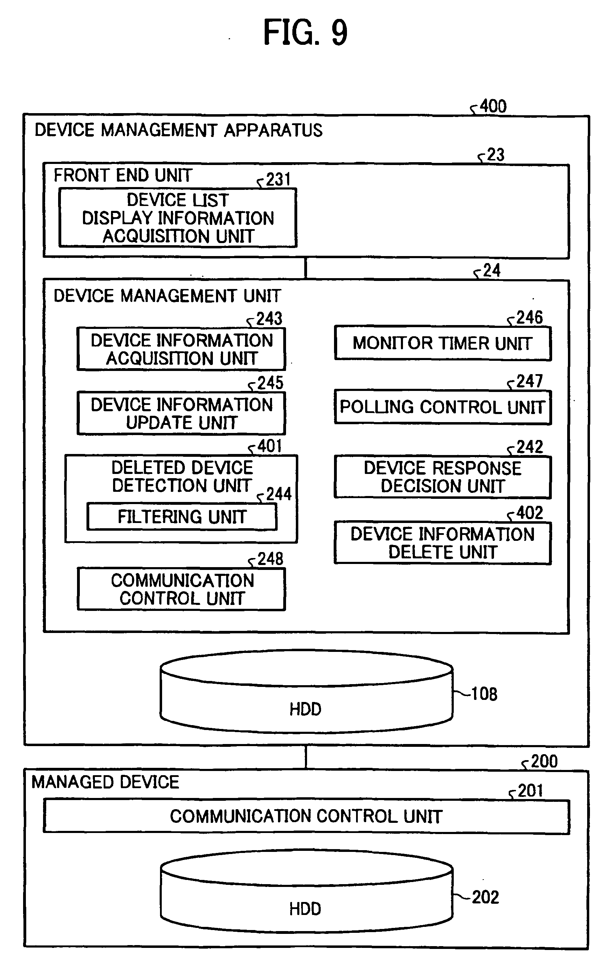

Fig. 9 is a functional block diagram illustrating the device management apparatus 400 and the managed devices 200 according to the second embodiment of the present invention. Fig. 9 shows the functional structures of the front end unit 23 and the device management unit 24 for the device management apparatus 400 and the functional structure of the managed devices 200.

As shown in Fig. 9, the device management unit 24 of the device management apparatus 400 mainly includes the device information acquisition unit 243, the device information update unit 245, a deleted device detection unit 401, a device information delete unit 402, the monitor timer unit 246, the polling control unit 247, the communication control unit 248, and the HDD 108. The front end unit 23 mainly includes the device list display information acquisition unit 231.

The functions and structures of the deleted device detection unit 401 and the device information delete unit 402 will now be described. Note that functions and structures of the other units than the deleted device detection unit 401 and the device information delete unit 402 are the same as those of the first embodiment, and thus will not be described again.

The deleted device detection unit 401 includes the filtering unit 244 and detects a device to be deleted (hereinafter referred to as the deleted device) from the device information filtered by the filtering unit 244. Note that the deleted device detection unit 401 is equivalent to a device management unit of the present invention.

The device information delete unit 402 deletes, from the device information table, the device information of the deleted device detected by the deleted device detection unit 401. Note that the device information delete unit 402 corresponds to a device management unit of the present invention.

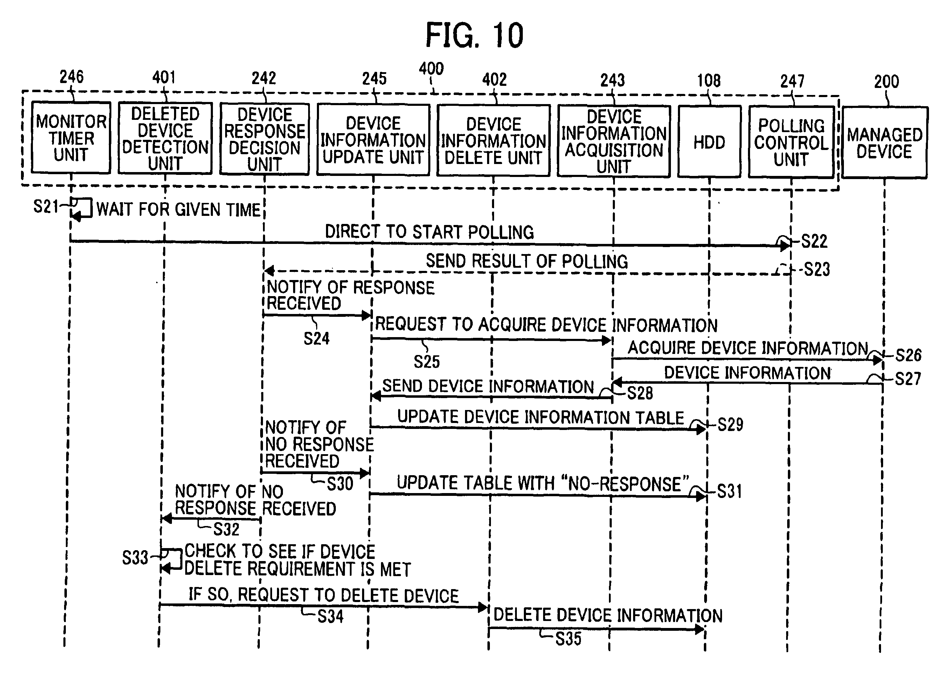

Now, the steps for deleting from the device information table the device information of a deleted device. Fig. 10 is a sequence diagram illustrating the steps for deleting the device information.

The monitor timer unit 246 waits for a given time (step S21), and then directs the polling control unit 247 to start polling for a certain period (step S22). The polling control unit 247 polls for the given period the managed devices 200 registered with the device information table, and then sends the result of polling to the device response decision unit 242 (step S23).

The device response decision unit 242 determines whether there is a response to the polling by the polling control unit 247, and if it is determined that there is a response, notifies the device information update unit 245 of the presence of a response (step S24). The device information update unit 245 sends a device information acquisition request to the device information acquisition unit 243 (step S25). The device information acquisition unit 243 acquires the device information from the managed devices 200 (step S26).

The managed device 200 acquires its own device information from the HDD 202 and sends it to the device information acquisition unit 243 (step S27). The device information acquisition unit 243 sends the received device information to the device information update unit 245 (step S28). The device information update unit 245 updates the device information table stored in the HDD 108 (step S29). More specifically, based on the device information acquired from the managed device 200 which has been determined by the device response decision unit 242 to have returned a response, the device information update unit 245 rewrites the status of the device included in the device information and changes the date and time of the acquisition of the device information to the latest update date and time.

On the other hand, when it was determined that there was no response, the device response decision unit 242 notifies the device information update unit 245 that there was no response (step S30). The device information update unit 245 updates the device information table stored in the HDD 108 with "no response" (step S31).

When it was determined that there was no response, the device response decision unit 242 also notifies the deleted device detection unit 401 that there is no response (step S32). The deleted device detection unit 401 checks to see if the managed device 200 that has sent no response meets a device delete requirement (step S33). Here, the device delete requirement is for deleting devices or means to meet the conditions for filtering by the filtering unit 244. More specifically, the requirement is to meet the conditions that the status in the device information table is "no response" and a certain period has elapsed from the latest update date and time.

When the device delete requirement is met, the deleted device detection unit 401 sends to the device information delete unit 402 a request to delete the deleted device from the device information table (step S34). The device information delete unit 402 deletes the record of the deleted device from the device information table (step S35).

In this manner, it is possible to efficiently manage devices by deleting the device information of a device which has been determined to have returned no response and for which a certain period has elapsed from the latest update date and time.

### (Third embodiment)

The first embodiment is configured to detect a device which has already been disconnected from a network and display the identification information of the detected device. In contrast to this, the present embodiment is designed to send an email to the client PC 300 when a device that has already been disconnected from a network is detected.

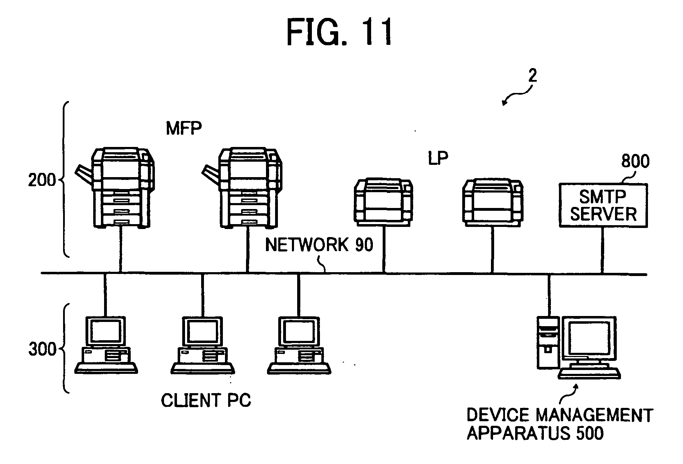

Fig. 11 is a schematic diagram illustrating a device management system 2 according to the third embodiment of the present invention. As shown in Fig. 11, the device management system 2 is configured such that one or more managed devices 200 such as devices or LPs, one or more client PCs 300, a device management apparatus 500, and an SMTP server 800 for transmitting and receiving an email are connected to the network 90. Note that the hardware configuration and the functional structure of the device management apparatus 500 are the same as those of the first embodiment, and thus will not be described again.

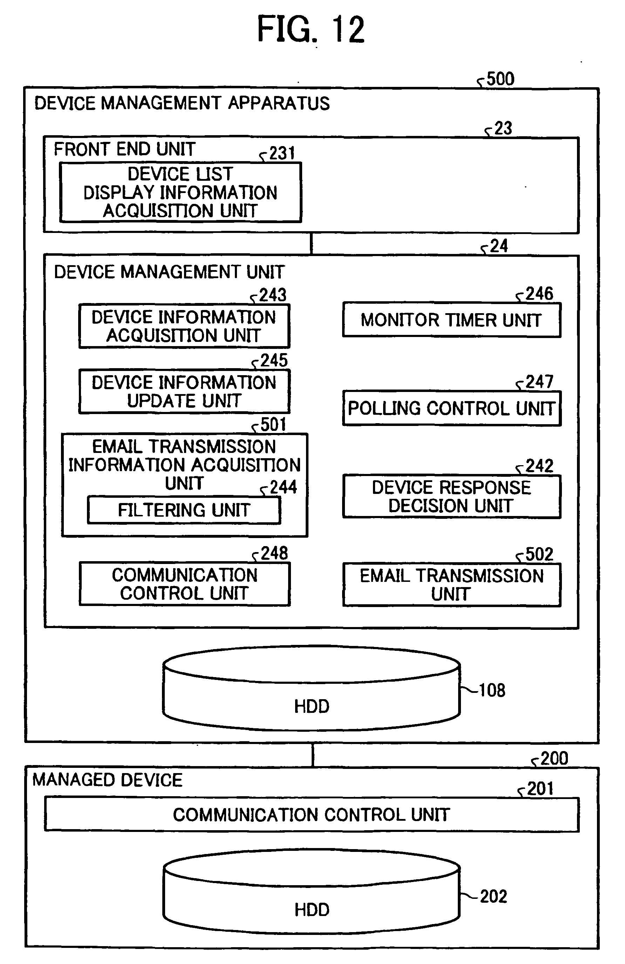

Now, the functional structures of the device management apparatus 500 and the managed devices 200 will be described. Fig. 12 is a functional block diagram of the device management apparatus 500 and the managed devices 200 according to the third embodiment of the present invention. Fig. 12 shows the functional structures of the front end unit 23 and the device management unit 24 for the device management apparatus 500, and the functional structure of the managed devices 200.

As shown in Fig. 12, the device management unit 24 of the device management apparatus 500 mainly includes an email transmission information acquisition unit 501, the monitor timer unit 246, the polling control unit 247, the communication control unit 248, an email transmission unit 502, and the HDD 108. The front end unit 23 mainly includes the device list display information acquisition unit 231.

The email transmission information acquisition unit 501 and the email transmission unit 502 will now be described. Note that the functions and structures of the other units than the email transmission information acquisition unit 501 and the email transmission unit 502 are the same as those of the first embodiment, and thus will not be described again.

The email transmission information acquisition unit 501, which includes the filtering unit 244 and the device information acquisition unit 243, and which acquires the filtered device information from the device information table updated by the device information update unit 245.

The email transmission unit 502 transmits by an email to the email address of the administrator the device information acquired by the email transmission information acquisition unit 501. Note that the transmitted email is routed to the SMTP server 800 via the communication control unit 248 and then to the email address.

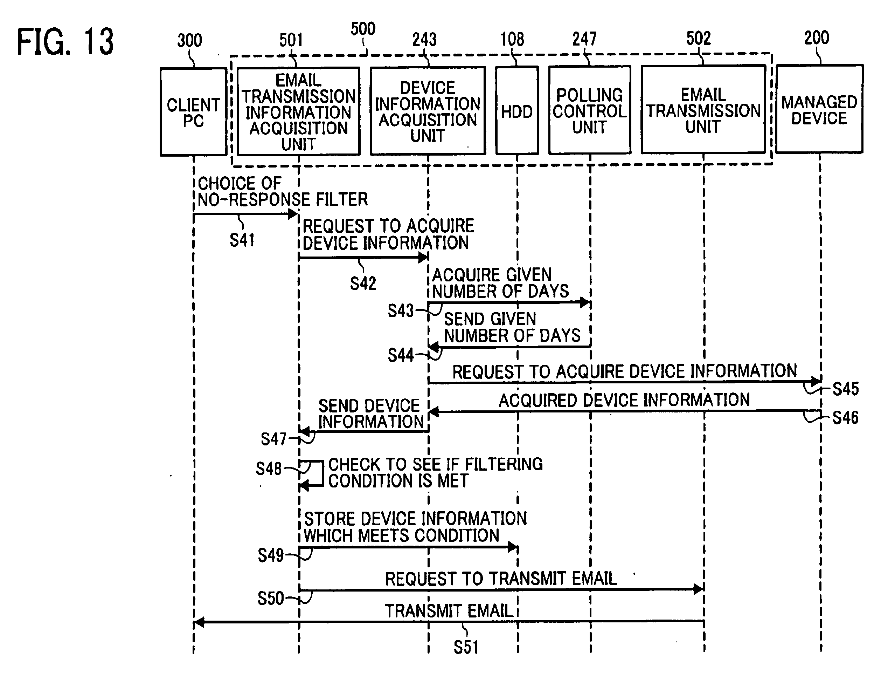

Now, the steps in the email transmission process for sending by an email the device information acquired through a no-response filter will be described. Fig. 13 is a sequence diagram illustrating the steps in the email transmission process according to the third embodiment.

The client PC 300 notifies the email transmission information acquisition unit 501 of a no-response filter choice (step S41). The email transmission information acquisition unit 501 requests the device information acquisition unit 243 to acquire device information (step S42). The device information acquisition unit 243 directs the polling control unit 247 to start polling for a given period (step S43). The polling control unit 247 then polls for a given period the managed devices 200 registered with the device information table, and then sends the result of polling to the device information acquisition unit 243 (step S44).

The device information acquisition unit 243 requests the managed devices 200 to acquire the device information (step S45), and upon acquisition of the device information from the managed devices 200 (step S46), sends the acquired device information to the email transmission information acquisition unit 501 (step S47).

The email transmission information acquisition unit 501 checks to see if the received device information meets the filtering conditions (step S48). More specifically, it is checked if the received device information concerns a device providing no response and a certain period has elapsed from the latest update date and time for the device. When the filtering conditions are met, the email transmission information acquisition unit 501 stores the device information that meets the conditions in the HDD 108 (step S49), and requests the email transmission unit 502 to send an email (step S50). The email transmission unit 502 sends the device information to the email address of the client PC 300.

In this manner, having received the email, the client PC 300 can determine whether or not to delete a device from the device information table after having confirmed the network connection status of the device information contained in the email and then having checked if the device is actually disconnected from the network.

### (Fourth embodiment)

The second embodiment is configured to detect a device that has been already disconnected from a network and then delete the identification information of the detected device from the device information table. In contrast to this, the present embodiment is designed to transmit by an email the deleted device information to the client PC 300 at the same time it is deleted.

Now, a description will be made to the functional structures of a device management apparatus 600 and the managed devices 200. Note that the device management system is the same as that of the third embodiment, while the hardware configuration and the functional structure of the device management apparatus 600 are the same as those of the first embodiment, and thus will not be described again.

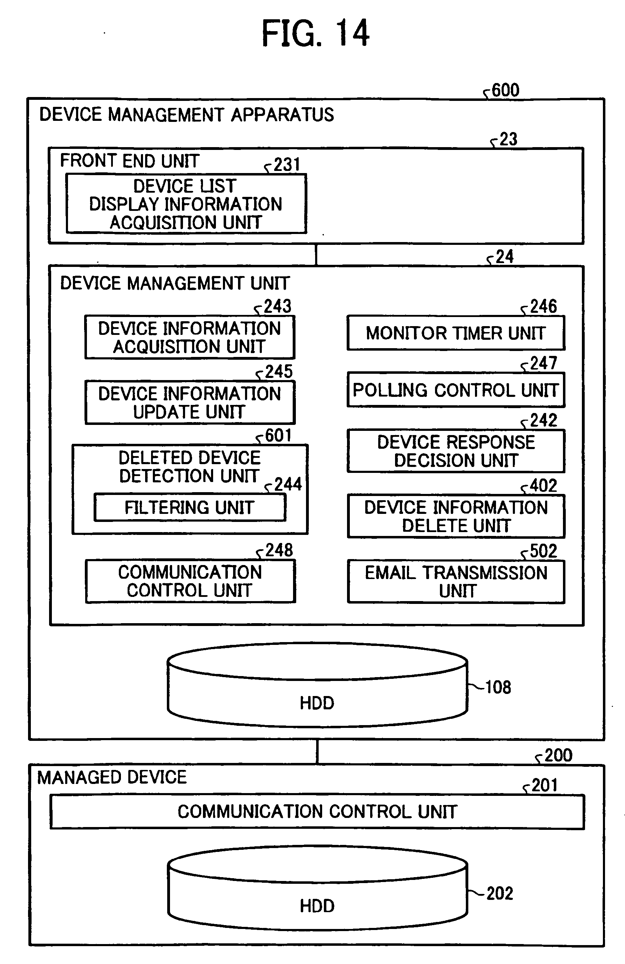

Fig. 14 is a functional block diagram illustrating the device management apparatus 600 and the managed devices 200 according to the fourth embodiment of the present invention. Fig. 14 shows the functional structures of the front end unit 23 and the device management unit 24 for the device management apparatus 600, and the functional structure of the managed devices 200.

As shown in Fig. 14, the device management unit 24 of the device management apparatus 600 mainly includes the device information acquisition unit 243, the device information update unit 245, a deleted device detection unit 601, the monitor timer unit 246, the polling control unit 247, the device response decision unit 242, the device information delete unit 402, the communication control unit 248, the email transmission unit 502, and the HDD 108. The front end unit 23 mainly includes the device list display information acquisition unit 231.

The function and structure of the deleted device detection unit 601 will now be described. Note that the functions and structures of the other units than the deleted device detection unit 601 are the same as those of each unit denoted with the same symbols in the first to third embodiments, and thus will not be described again.

When the filtering unit 244 filters a device to be deleted, the deleted device detection unit 601 sends the device information of the filtered device to be deleted to the email transmission unit 502, requesting it to send an email.

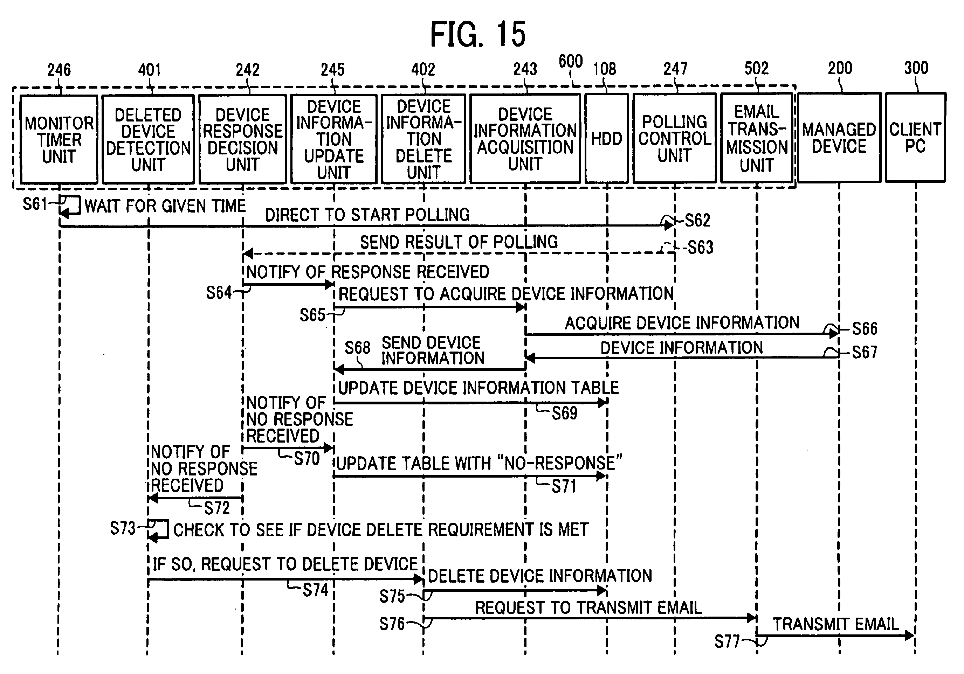

Now, a description will be made to the steps in the email transmission process for transmitting by an email the device information, which was acquired by the no-response filter and deleted by the device information delete unit 402. Fig. 15 is a sequence diagram illustrating the steps in the email transmission process according to the fourth embodiment.

The steps from S61 to S75 are the same as the steps from S21 to S35 in the flowchart of Fig. 10 described in relation to the second embodiment, and thus will not be described again.

In step S76, the device information delete unit 402 sends to the email transmission unit 502 a request to transmit an email indicating that the device information of the deleted device filtered to be deleted by the filtering unit 244 was deleted (step S76).

The email transmission unit 502 notifies the client PC 300 of the device information of a device deleted from the device information table and of the fact that the device information was deleted (step S77).

In this way, the present embodiment is configured to inform the client PC 300 of the device information of a device deleted from the device information table as well as of the fact that the device information was deleted therefrom. This allows the user to know the device that has been deleted from the device information table.

As a result, the user can also re-register a device, which was once deleted, with the device information table when the device is actually connected to the network but has been turned off for a long time and therefore returned no response. Thus, the user can manage devices more effectively according to the actual connection status.

Device management programs to be executed in the device management apparatus according to the present embodiment are provided in the form of an installable or executable file stored in a computer-readable storage medium such as a CD-ROM, a flexible disk (FD), a CD-R, or a DVD (Digital Versatile Disk).

Furthermore, the device management program to be executed in the device management apparatus according to the present embodiment may also be stored in a computer connected to a network, such as the Internet, so that the program can be provided by being downloaded via the network. The device management program to be executed in the device management apparatus according to the present embodiment can also be provided or distributed via a network such as the Internet.

Furthermore, the device management program of the present embodiment can also be written in advance onto a ROM or the like to be provided for use.

The device management program to be executed in the device management apparatus according to the present embodiment has a module structure that includes each of the units described above (the device list acquisition unit, the monitor timer unit, the polling control unit, and the communication control unit). As the actual hardware structure, the CPU (processor) reads the device management program from the storage medium and executes it to load each of the units onto the main memory device. This allows the device list acquisition unit, the monitor timer unit, the polling control unit, and the communication control unit to be generated on the main memory device.

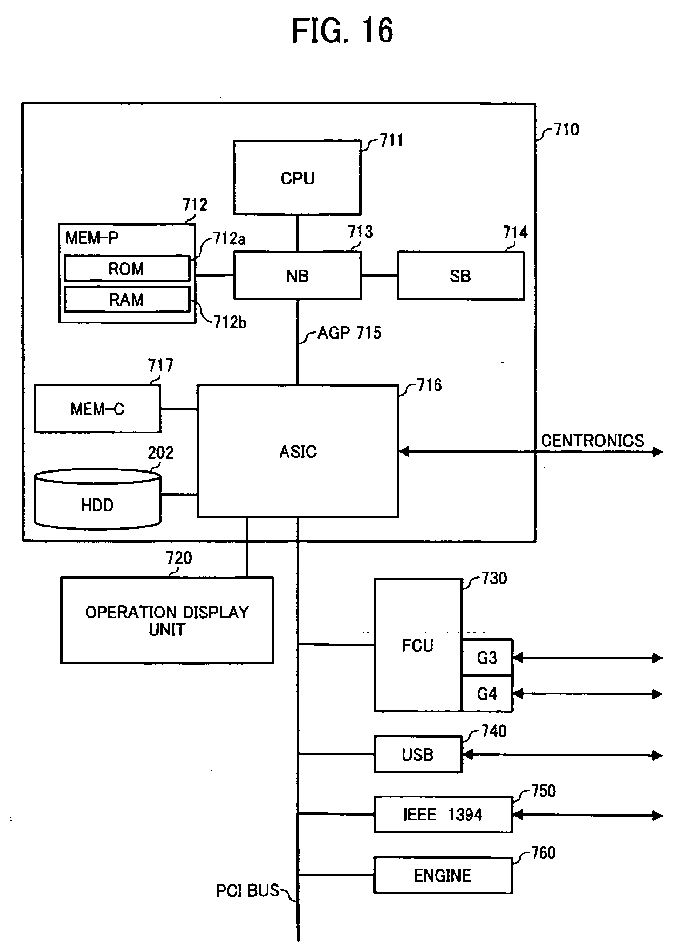

Fig. 16 is a block diagram illustrating the hardware configuration of a multifunction peripheral as the managed devices 200 according to the first to fourth embodiments. As illustrated, this multifunction peripheral has a control unit 710 and an engine unit (Engine) 760 connected to each other by a PCI (Peripheral Component Interface) bus. The control unit 710 serves to provide control to the entire multifunction peripheral, drawing, communications, and inputs from an operation unit (not shown). The engine unit 760 may be a printer engine connectable to the PCI bus, including, for example, a black and white plotter, one-drum color plotter, four-drum color plotter, scanner, or fax unit. Note that the engine unit 760 includes an image processing unit, such as for error diffusion or the gamma transform, in addition to the so-called engine section such as plotters.

The control unit 710 has a CPU 711, a Northbridge (NB) 713, a system memory device (MEM-P) 712, a Southbridge (SB) 714, a local memory device (MEM-C) 717, an ASIC (Application Specific Integrated Circuit) 716, and a hard disk drive (HDD) 202, and is configured to connect between the Northbridge (NB) 713 and the ASIC 716 by an AGP (Accelerated Graphics Port) bus 715. Also, the MEM-P 712 further has a ROM (Read Only Memory) 712a and a RAM (Random Access Memory) 712b.

The CPU 711 controls the entire multifunction peripheral, and has a chip set that is made up of the NB 713, the MEM-P 712, and the SB 714. The CPU 711 is connected to other devices via this chip set.

The NB 713, which serves as a bridge for connecting the CPU 711 to the MEM-P 712, the SB 714, and the AGP 715, has a memory controller for controlling, for example, read and write operations on the MEM-P 712, a PCI master, and an AGP target.

The MEM-P 712, which includes a ROM 712a and a RAM 712b, serves as a system memory device used for storing programs and data, expanding programs and data, and drawing by printers. The ROM 712a is a read-only memory used for storing programs and data. The RAM 712b is a readable and writable memory device used, for example, for expanding programs and data and drawing by printers.

The SB 714 serves as a bridge to connect the NB 713 to the PCI device and the peripheral device. This SB 714 is connected to the NB 713 via the PCI bus. The PCI bus is connected, for example, with a network interface (I/F).

The ASIC 716 is an IC (Integrated Circuit) which is intended for image processing and which has hardware components for image processing, and plays the role of a bridge for connecting between the AGP 715, the PCI bus, the HDD 202, and the MEM-C 717. This ASIC 716 includes a PCI target, an AGP master, an arbiter (ARB) as the core of the ASIC 716, a memory controller to control the MEM-C 717, a plurality of DMACs (Direct Memory Access controller), for example, to rotate image data by hardware logic, and a PCI unit to transfer data to and from the engine unit 760 via the PCI bus. This ASIC 716 is connected with, via the PCI bus, a FCU (Facsimile Control Unit) 730, a USB (Universal Serial Bus) 740, and an IEEE 1394 (the Institute of Electrical and Electronics Engineers 1394) interface 750. The ASIC 716 is directly connected with an operation display unit 720.

The MEM-C 717 is a local memory device used as a copy image buffer or a symbol buffer. The HDD 202 is a storage device for storing image data, programs, font data, and forms.

The AGP 715, or a bus interface for graphics accelerator cards proposed to accelerate graphic processing, accelerates the function of graphics accelerator cards by directly accessing the MEM-P 712 with high throughput.

Note that the device management program to be executed in the device management apparatus according to the present embodiment is written on a ROM or the like in advance and then provided for use.

The device management program to be executed in the device management apparatus according to the present embodiment may also be provided in the form of installable or executable files stored on a computer-readable storage medium such as a CD-ROM, a flexible disk (FD), a CD-R, or a DVD (Digital Versatile Disk).

Furthermore, the device management program to be executed in the device management apparatus according to the present embodiment may also be stored in a computer connected to a network, such as the Internet, so that the program can be provided by being downloaded via the network. The device management program to be executed in the device management apparatus according to the present embodiment can also be provided or distributed via a network such as the Internet.

The device management program to be executed in the device management apparatus according to the present embodiment has a module structure that includes each of the units described above (the device list acquisition unit, the monitor timer unit, the polling control unit, and the communication control unit). As the actual hardware structure, the CPU (processor) reads the device management program from the ROM and executes it to load each of the units onto the main memory device. This allows the device list acquisition unit, the monitor timer unit, the polling control unit, and the communication control unit to be generated on the main memory device.

The present invention makes it possible to efficiently manage devices connected to a network.

According to an aspect of the present invention there is provided a device management apparatus connected to one or more devices via a network, including; a response request unit that requests a response from the devices via the network; a reception unit that receives the response from the respective devices; a storage unit that stores a record, the record being arranged such that device identification information for identifying the devices is associated with response information indicative of whether the response was received and a date and time at which the response was received; a recording unit that records, if the response was received, the response information indicative of a presence of the response and the date and time on the record associated with the device identification information of corresponding one of the devices from which the response was received, or records, if the response was not received, the response information indicative of an absence of a response on the record associated with the device identification information of corresponding one of the devices from which the response was not received; and a delete unit that deletes from the storage unit the device identification information for which the corresponding response information is indicative of an absence of the response and an elapsed time from the corresponding date and time has exceeded a predetermined period.

The device management may further include an email transmission unit that notifies by an email an external information processor that the device identification information was deleted from the storage unit, upon deleting from the storage unit the device identification information for which the corresponding response information is indicative of an absence of a response and an elapsed time from the corresponding date and time has exceeded a predetermined period.

The device management may further include a condition setting unit that sets the predetermined period to a different value for each predetermined type of the devices.

According to another aspect of the present invention there is provided a device management system including one or more devices and a device management apparatus connected via a network. The device management apparatus includes: a response request unit that requests a response from the devices via the network; a reception unit that receives the response from the respective devices connected to the network; a storage unit that stores a record, the record being arranged such that device identification information for identifying the devices is associated with response information indicative of whether the response was received and a date and time at which the response was received; a recording unit that records, if the response was received, the response information indicative of a presence of the response and the date and time on the record associated with the device identification information of corresponding one of the devices from which the response was received, or records, if the response was not received, the response information indicative of an absence of the response on the record associated with the device identification information of corresponding one of the devices from which the response was not received; and a delete unit that deletes from the storage unit the device identification information for which the corresponding response information is indicative of an absence of the response and an elapsed time from the corresponding date and time has exceeded a predetermined period. The devices includes: a transmission unit that sends the response to the device management apparatus via the network when having received the response request from the device management apparatus.

According to still another aspect of the present invention there is provided a computer program product comprising a computer-usable medium having computer-readable program codes. The program codes when executed causing a computer to execute: a response request step of requesting a response from one or more devices via a network; a reception step of receiving the response from the respective devices; a recording step of recording a record on a storage unit, if the response was received, the record being arranged such that the response information indicative of a presence of the response, the date and time, and the device identification information of corresponding on of the devices from which the response was received are associated with each other, or for recording a record on the storage unit, if the response was not received, the record being arranged such that the response information indicative of an absence of the response is associated with the device identification information of corresponding on of the devices from which the response was not received, and a delete step of deleting from the storage unit the device identification information for which the corresponding response information is indicative of an absence of the response and an elapsed time from the corresponding date and time has exceeded a predetermined period. Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A device management apparatus (100, 500) connected to one or more devices (200) via a network (90), comprising:
a response request unit (243) configured to request a response from the devices (200) via the network (90);
a reception unit (243) configured to receive the response from the respective devices (200),
a storage unit (108) that is configured to store a record, the record being arranged such that device identification information for identifying the devices (200) is associated with response information indicative of whether the response was received and, if the response was received, a date and time at which the response was received;
a recording unit (245) that is configured to record, if the response was received, the response information indicative of a presence of the response and the date and time on the record associated with the device identification information of corresponding one of the devices (200) from which the response was received, or to record, if the response was not received, the response information indicative of an absence of the response on the record associated with the device identification information of corresponding one of the devices (200) from which the response was not received; and
an output control unit (23; 244) that is configured to read on the storage unit (108) and to deliver the device identification information indicating that the corresponding response information is indicative of an absence of the response and, if a response had been previously received, an elapsed time from the corresponding date and time of the previously received response has exceeded a predetermined period,
**characterized by**
a condition setting unit (244) configured to set the predetermined period to a different value for each type of the devices (200).

2. The device management apparatus (100) according to claim 1, further comprising a display unit (233), and
a device management unit (24) configured to read on the storage unit (108) and to display on a display unit (233) the device identification information for which the corresponding response information is indicative of an absence of the response and an elapsed time from corresponding the date and time has exceeded the predetermined period.

3. The device management apparatus (500) according to claim 1, comprising a device management unit (24; 502) configured to read on the storage unit (108) the device identification information for which the corresponding response information is indicative of an absence of the response and an elapsed time from the corresponding date and time has exceeded the predetermined period, and to then send an email to notify a predetermined destination of the device identification information read out.

4. A device management system (1, 2) including one or more devices (200) and a device management apparatus (100, 500) according to any one of the preceding claims, the device management apparatus (100, 500) being connected to the devices (200) via a network (90).

5. The device management system (1, 2) of the preceding claim, wherein the devices (200) include
a transmission unit (201) that is configured to send the response to the device management apparatus (100, 500) via the network (90) when having received the response request from the device management apparatus (100, 500).

6. The device management system (1, 2) according to anyone of the preceeding claims, comprising a device response decision unit (242) configured to issue a response confirmation request to determine whether there is a response from the one or more devices (200), wherein the device response decision unit (242) is configured to issue the response confirmation request before the request from the response request unit (243) is issued.

7. A computer program product comprising a computer-usable medium having computer-readable program code,
wherein the program code when executed causes a computer to execute:
a response request step of requesting a response from one or more devices (200) via a network (90);
a reception step of receiving the response from the respective devices (200);
a storing step of storing a record in a storage unit (108), the record being arranged such that device identification information for identifying the devices (200) is associated with response information indicative of whether the response was received and, if the response was received, a date and time at which the response was received;
a recording step of recording a record on a storage unit (108), if the response was received, the record being arranged such that the response information indicative of a presence of the response, the date and time, and the device identification information of corresponding on of the devices (200) from which the response was received are associated with each other, or of recording a record on the storage unit (108), if the response was not received, the record being arranged such that the response information indicative of an absence of the response is associated with the device identification information of corresponding one of the devices (200) from which the response was not received; and
an output step of reading on the storage unit (108) and delivering the device identification information for which the corresponding response information is indicative of an absence of the response and, if a response had been previously received, an elapsed time from the corresponding date and time of the previously received response has exceeded a predetermined period,
**characterized by**
a condition setting step of setting the predetermined period to a different value for each type of the devices (200).

8. The computer program product according to claim 7,
wherein the program code when executed causes the computer to further execute:
a step of reading on the storage unit (108) and displaying on a display unit (233) the device identification information for which the corresponding response information is indicative of an absence of the response and an elapsed time from the corresponding date and time has exceeded the predetermined period.

9. The computer program product according to claim 7,
wherein the program code when executed causes the computer to further execute:
a step of reading on the storage unit (108) the device identification information for which the corresponding response information is indicative of an absence of the response and an elapsed time from the corresponding date and time has exceeded the predetermined period, and then sending an email to notify a predetermined destination of the device identification information read out.

10. The computer program according to anyone of claims 7 to 9, wherein the program code when executed causes a computer to further execute:
a step of issuing, by a device response decision unit (242), a response confirmation request in order to determine whether there is a response from the one or more devices (200), wherein the step of issuing a response confirmation request is executed before the response request step is executed.

## Patentansprüche

1. Einrichtungsverwaltungsvorrichtung (100, 500), die mit einer oder mehreren Vorrichtungen (200) über ein Netzwerk (90) verbunden ist und enthält:
eine Antwortanforderungseinheit (243), die eingerichtet ist, eine Antwort von den Einrichtungen (200) über das Netzwerk (90) anzufordern;
eine Empfangseinheit (243), die eingerichtet ist, die Antwort von den jeweiligen Einrichtungen (200) zu empfangen;
eine Speichereinheit (108), die eingerichtet ist, eine Aufzeichnung zu speichern, wobei die Aufzeichnung so angeordnet ist, dass Einrichtungsidentifikationsinformationen zum Identifizieren der Einrichtungen (200) mit Antwortinformationen verknüpft sind, die anzeigen, ob die Antwort empfangen wurde und, wenn die Antwort empfangen wurde, ein Datum und eine Uhrzeit, zu dem bzw. zu der die Antwort empfangen wurde, anzeigen;
eine Aufzeichnungseinheit (245), die eingerichtet ist, wenn die Antwort empfangen wurde, die Antwortinformationen aufzuzeichnen, die das Vorhandensein der Antwort und das Datum und die Uhrzeit in der Aufzeichnung, die mit den Einrichtungsidentifikationsinformationen der entsprechenden Einrichtung (200), von der die Antwort empfangen wurde, verknüpft ist, anzeigen, oder, wenn die Antwort nicht empfangen wurde, die Antwortinformationen aufzuzeichnen, die eine Abwesenheit der Antwort in der Aufzeichnung, die mit den Einrichtungsidentifikationsinformationen der entsprechenden Einrichtung (200), von der die Antwort nicht empfangen wurde, verknüpft ist, anzeigen; und
eine Ausgabesteuereinheit (23; 244), die eingerichtet ist, auf der Speichereinheit (108) zu lesen und die Einrichtungsidentifikationsinformationen, die anzeigen, dass die entsprechenden Antwortinformationen eine Abwesenheit der Antwort anzeigen und, wenn eine Antwort zuvor erhalten worden war, eine vergangene Zeit anzeigen, die seit dem entsprechenden Datum und der entsprechenden Uhrzeit der zuvor empfangenen Antwort eine vorbestimmte Dauer überschritten hat,
**gekennzeichnet durch**
eine Bedingungseinstelleinheit (244), die eingerichtet ist, die vorbestimmte Dauer auf einen unterschiedlichen Wert für jeden Typ der Einrichtungen (200) einzustellen.

2. Einrichtungsverwaltungsvorrichtung (100) gemäß Anspruch 1, ferner enthaltend eine Anzeigeeinheit (233) und
eine Einrichtungsverwaltungseinheit (24), die eingerichtet ist, auf der Speichereinheit (108) zu lesen und auf einer Anzeigeeinheit (233) die Einrichtungsidentifikationsinformationen anzuzeigen, für die die entsprechende Antwortinformationen eine Abwesenheit der Antwort und eine vergangene Zeit, die seit entsprechend dem Datum und der Zeit die vorbestimmte Dauer überschritten hat, anzeigt.

3. Einrichtungsverwaltungsvorrichtung (100) gemäß Anspruch 1, enthaltend eine Einrichtungsverwaltungseinheit (24; 502), die eingerichtet ist, auf der Speichereinheit (108) die Einrichtungsidentifikationsinformationen zu lesen, für die die entsprechenden Antwortinformationen eine Abwesenheit der Antwort anzeigen und eine seit dem entsprechenden Datum und der entsprechenden Zeit vergangen Zeit hat die vorbestimmte Dauer überschritten, und dann eine Email zu senden, um ein vorbestimmtes Ziel über die ausgelesene Einrichtungsidentifikationsinformationen zu unterrichten.

4. Einrichtungsverwaltungssystem (1, 2), das eine oder mehrere Einrichtungen (200) und eine Einrichtungsverwaltungsvorrichtung (100, 500) gemäß irgendeinem der vorhergehenden Ansprüche enthält, wobei die Einrichtungsverwaltungsvorrichtung (100, 500) mit den Einrichtungen (200) über das Netzwerk (90) verbunden ist.

5. Einrichtungsverwaltungssystem (1, 2) gemäß dem vorhergehenden Anspruch, bei der die Einrichtungen (200) enthalten:
eine Übertragungseinheit (201), die eingerichtet ist, die Antwort die Einrichtungsverwaltungsvorrichtung (100, 500) über das Netzwerk (90) zu senden, wenn sie die Antwortanfrage von der Einrichtungsverwaltungsvorrichtung (100, 500) empfangen hat.

6. Einrichtungsverwaltungssystem (1, 2) gemäß irgendeinem der vorhergehenden Ansprüche, das eine Einrichtungsantwortentscheidungseinheit (242) enthält, die eingerichtet ist, eine Antwortbestätigungsanfrage auszugeben, ob es eine Antwort von der einen oder mehr Einrichtung (200) gibt, wobei die Einrichtungsantwortentscheidungseinheit (242) eingerichtet ist, die Antwortbestätigungsanfrage auszugeben, bevor die Anfrage von der Antwortanfrageeinheit (243) ausgegeben wird.

7. Computerprogrammprodukt, enthaltend ein computerverwendbares Medium, das computerlesbaren Programmcode aufweist,
wobei der Programmcode, wenn er ausgeführt wird, den Computer dazu veranlasst, Folgendes auszuführen:
einen Antwortanfrageschritt, in dem eine Antwort von einer oder mehr Einrichtungen (200) über ein Netzwerk (90) angefragt wird;
einen Empfangsschritt, in dem die Antwort von den entsprechenden Einrichtungen (200) empfangen wird;
einen Speicherschritt, in dem eine Aufzeichnung in einer Speichereinheit (108) gespeichert wird, wobei die Aufzeichnung so angeordnet ist, dass Einrichtungsidentifikationsinformationen zum Identifizieren der Einrichtungen (200) mit Antwortinformationen verknüpft sind, die anzeigen, ob die Antwort empfangen wurde und, wenn die Antwort empfangen wurde, ein Datum und eine Uhrzeit, zu denen die Antwort empfangen wurde,
einen Aufzeichnungsschritt, in dem eine Aufzeichnung auf einer Speichereinheit (108) aufgezeichnet wird, wenn die Antwort empfangen wurde, wobei die Aufzeichnung so angeordnet ist, dass die Antwortinformationen, die ein Vorhandensein der Antwort, das Datum und die Uhrzeit anzeigen und die Einrichtungsidentifikationsinformationen der entsprechenden Einrichtung (200), von der die Antwort empfangen wurde, miteinander verknüpft werden, oder in dem einen Aufzeichnung auf der Speichereinheit (108) aufgezeichnet wird, wenn die Antwort nicht empfangen wurde, wobei die Aufzeichnung so angeordnet ist, dass die Antwortinformationen, die eine Abwesenheit der Antwort anzeigen, mit den Einrichtungsidentifikationsinformationen der entsprechenden Einrichtung (200), von der die Antwort nicht empfangen wurde, verknüpft werden; und
einen Ausgabeschritt, in dem die Einrichtungsidentifikationsinformationen, für die die entsprechenden Antwortinformationen eine Abwesenheit der Antwort anzeigen, und, wenn eine Antwort zuvor empfangen worden war, eine seit dem entsprechenden Datum und der entsprechenden Uhrzeit der zuvor empfangenen Antwort vergangene Zeit, die eine vorbestimmte Dauer überschritten hat, auf der Speichereinheit (108) gelesen und ausgeliefert werden,
**gekennzeichnet durch**
einen Bedingungseinstellschritt, in dem die vorbestimmte Dauer auf einen unterschiedlichen Wert für jeden Typ der Einrichtungen (200) eingestellt wird.

8. Computerprogrammprodukt gemäß Anspruch 7,
bei dem der Programmcode, wenn er ausgeführt wird, den Computer dazu veranlasst, ferner auszuführen:
einen Schritt des Lesens auf der Speichereinheit (108) und des Anzeigens der Einrichtungsidentifikationsinformationen, für die die entsprechenden Antwortinformationen eine Abwesenheit der Antwort und eine seit dem entsprechenden Datum und der entsprechenden Uhrzeit vergangenen Zeit, die die vorbestimmte Daure überschritten hat, auf einer Anzeigeeinheit (233).

9. Computerprogrammprodukt gemäß Anspruch 7,
bei dem der Programmcode, wenn er ausgeführt wird, den Computer dazu veranlasst, ferner auszuführen:
einen Schritt des Lesens der Einrichtungsidentifikationsinformationen auf der Speichereinheit (108), für die die entsprechende Antwortinformation eine Abwesenheit der Antwort und eine seit dem entsprechenden Datum und der entsprechenden Zeit eine vergangene Zeit die vorbestimmte Dauer überschritten hat, anzeigt und das anschließenden Sendens einer Email, um ein vorbestimmtes Ziel über die ausgelesenen Einrichtungsidentifikationsinformationen zu unterrichten.

10. Computerprogrammprodukt gemäß irgendeinem der Ansprüche 7 bis 9, bei dem der Programmcode, wenn er ausgeführt wird, den Computer dazu veranlasst, ferner auszuführen:
einen Schritt des Ausgebens einer Antwortbestätigungsanfrage durch eine Einrichtungsantwortentscheidungseinheit (242), um zu bestimmen, ob es eine Antwort von der einen oder mehr Einrichtung (200) gibt, wobei der Schritt des Ausgebens der Antwortbestätigungsanfrage ausgeführt wird, bevor der Antwortanfrageschritt ausgeführt wird.

## Revendications

1. Appareil de gestion de dispositif (100, 500) connecté à un ou plusieurs dispositifs (200) via un réseau (90), comprenant :
une unité de demande de réponse (243) configurée pour demander une réponse aux dispositifs (200) via le réseau (90) ;
une unité de réception (243) configurée pour recevoir la réponse des dispositifs respectifs (200),
une unité de stockage (108) qui est configurée pour stocker un enregistrement, l'enregistrement étant agencé de sorte que des informations d'identification de dispositif pour identifier les dispositifs (200) soient associées à des informations de réponse indicatives de si la réponse a été reçue et, si la réponse a été reçue, d'une date et d'une heure auxquelles la réponse a été reçue ;
une unité d'enregistrement (245) qui est configurée pour enregistrer, si la réponse a été reçue, les informations de réponse indicatives d'une présence de la réponse et de la date et de l'heure sur l'enregistrement associées aux informations d'identification de dispositif d'un dispositif correspondant des dispositifs (200) desquels la réponse a été reçue, ou pour enregistrer, si la réponse n'a pas été reçue, les informations de réponse indicatives d'une absence de la réponse sur l'enregistrement associées aux informations d'identification de dispositif d'un dispositif correspondant des dispositifs (200) desquels la réponse n'a pas été reçue ; et
une unité de contrôle de sortie (23 ; 244) qui est configurée pour lire sur l'unité de stockage (108) et pour délivrer les informations d'identification de dispositif indiquant que les informations de réponse correspondantes sont indicatives d'une absence de la réponse et, si une réponse avait été reçue précédemment, un temps écoulé depuis la date et l'heure correspondantes de la réponse reçue précédemment a dépassé une période prédéterminée,
**caractérisé par**
une unité d'établissement de condition (244) configurée pour établir la période prédéterminée à une valeur différente pour chaque type des dispositifs (200).

2. Appareil de gestion de dispositif (100) selon la revendication 1, comprenant en outre une unité d'affichage (233), et
une unité de gestion de dispositif (24) configurée pour lire sur l'unité de stockage (108) et pour afficher sur une unité d'affichage (233) les informations d'identification de dispositif pour lesquelles les informations de réponse correspondantes sont indicatives d'une absence de la réponse et un temps écoulé depuis la date et l'heure correspondantes a dépassé la période prédéterminée.

3. Appareil de gestion de dispositif (500) selon la revendication 1, comprenant une unité de gestion de dispositif (24 ; 502) configurée pour lire sur l'unité de stockage (108) les informations d'identification de dispositif pour lesquelles les informations de réponse correspondantes sont indicatives d'une absence de la réponse et un temps écoulé depuis la date et l'heure correspondantes a dépassé la période prédéterminée, et pour envoyer ensuite un courriel pour notifier à une destination prédéterminée les informations d'identification de dispositif sorties en lecture.

4. Système de gestion de dispositif (1, 2) incluant un ou plusieurs dispositifs (200) et un appareil de gestion de dispositif (100, 500) selon l'une quelconque des revendications précédentes, l'appareil de gestion de dispositif (100, 500) étant connecté aux dispositifs (200) via un réseau (90).

5. Système de gestion de dispositif (1, 2) selon la revendication précédente, dans lequel les dispositifs (200) incluent
une unité de transmission (201) qui est configurée pour envoyer la réponse à l'appareil de gestion de dispositif (100, 500) via le réseau (90) lorsqu'elle a reçu la demande de réponse en provenance de l'appareil de gestion de dispositif (100, 500).

6. Système de gestion de dispositif (1, 2) selon l'une quelconque des revendications précédentes, comprenant une unité de décision de réponse de dispositif (242) configurée pour émettre une demande de confirmation de réponse afin de déterminer s'il y a une réponse en provenance des un ou plusieurs dispositifs (200), dans lequel l'unité de décision de réponse de dispositif (242) est configurée pour émettre la demande de confirmation de réponse avant que la demande à l'unité de demande de réponse (243) ne soit émise.

7. Produit de programme informatique comprenant un support utilisable par ordinateur ayant un code de programme lisible par ordinateur,
dans lequel le code de programme, lorsqu'il est exécuté, amène un ordinateur à exécuter :
une étape de demande de réponse consistant à demander une réponse à un ou plusieurs dispositifs (200) via un réseau (90) ;
une étape de réception consistant à recevoir la réponse des dispositifs respectifs (200) ;
une étape de stockage consistant à stocker un enregistrement dans une unité de stockage (108), l'enregistrement étant agencé de sorte que des informations d'identification de dispositif pour identifier les dispositifs (200) soient associées à des informations de réponse indicatives de si la réponse a été reçue et, si la réponse a été reçue, d'une date et d'une heure auxquelles la réponse a été reçue ;
une étape d'enregistrement consistant à enregistrer un enregistrement sur une unité de stockage (108), si la réponse a été reçue, l'enregistrement étant agencé de sorte que les informations de réponse indicatives d'une présence de la réponse, de la date et de l'heure, et les informations d'identification de dispositif d'un dispositif correspondant des dispositifs (200) desquels la réponse a été reçue soient associées les unes aux autres, ou consistant à enregistrer un enregistrement sur l'unité de stockage (108), si la réponse n'a pas été reçue, l'enregistrement étant agencé de sorte que les informations de réponse indicatives d'une absence de la réponse soient associées aux informations d'identification de dispositif d'un dispositif correspondant des dispositifs (200) desquels la réponse n'a pas été reçue ; et
une étape de sortie consistant à lire sur l'unité de stockage (108) et à délivrer les informations d'identification de dispositif pour lesquelles les informations de réponse correspondantes sont indicatives d'une absence de la réponse et, si une réponse avait été reçue précédemment, un temps écoulé depuis la date et l'heure correspondantes de la réponse reçue précédemment a dépassé une période prédéterminée,
**caractérisé par**
une étape d'établissement de condition consistant à établir la période prédéterminée à une valeur différente pour chaque type des dispositifs (200).

8. Produit de programme informatique selon la revendication 7,
dans lequel le code de programme, lorsqu'il est exécuté, amène l'ordinateur à exécuter en outre :
une étape consistant à lire sur l'unité de stockage (108) et à afficher sur une unité d'affichage (233) les informations d'identification de dispositif pour lesquelles les informations de réponse correspondantes sont indicatives d'une absence de la réponse et un temps écoulé depuis la date et l'heure correspondantes a dépassé la période prédéterminée.

9. Produit de programme informatique selon la revendication 7,
dans lequel le code de programme, lorsqu'il est exécuté, amène l'ordinateur à exécuter en outre :
une étape consistant à lire sur l'unité de stockage (108) les informations d'identification de dispositif pour lesquelles les informations de réponse correspondantes sont indicatives d'une absence de la réponse et un temps écoulé depuis la date et l'heure correspondantes a dépassé la période prédéterminée, et envoyer ensuite un courriel pour notifier à une destination prédéterminée les informations d'identification de dispositif sorties en lecture.

10. Produit de programme informatique selon l'une quelconque des revendications 7 à 9, dans lequel le code de programme, lorsqu'il est exécuté, amène l'ordinateur à exécuter en outre :
une étape consistant à émettre, par une unité de décision de réponse de dispositif (242), une demande de confirmation de réponse afin de déterminer s'il y a une réponse en provenance des un ou plusieurs dispositifs (200), dans lequel l'étape consistant à émettre une demande de confirmation de réponse est exécutée avant que l'étape de demande de réponse ne soit exécutée.
